# EUROPÄISCHE PATENTANMELDUNG

(11) **EP 3 792 093 A1**
(43) Veröffentlichungstag der Anmeldung: **17.03.2021**
(21) Anmeldenummer: 20191447.0
(22) Anmeldetag: 18.08.2020
(51) Int. Cl.: B60L 3/04, B60L 53/30, B60L 53/62, B60L 3/00, B60L 53/66

(54) **VERFAHREN UND SCHALTUNGSANORDNUNG ZUR NOT-ENTRIEGELUNG EINES LADESTECKERS FÜR EINE LADESTATION ZUR AUFLADUNG EINES ELEKTRISCHEN ENERGIESPEICHERS EINES ELEKTROFAHRZEUGS**

(30) Priorität: 20.08.2019 DE 102019122377
(71) Anmelder: Bender GmbH & Co. KG, 35305 Grünberg (DE)
(72) Erfinder: MORICH, Lars, 65604 Elz (DE); FREITAG, Steffen, 35321 Laubach (DE); SCHLEITER, Leonie, 35119 Rosenthal (DE)
(74) Vertreter: advotec.

(57) **Zusammenfassung**

Die Erfindung betrifft ein Verfahren und eine Schaltungsanordnung zur Not-Entriegelung eines Ladesteckers für eine Ladestation zur Aufladung eines elektrischen Energiespeichers eines Elektrofahrzeugs, wobei die Ladestation einen durch eine Elektromotor-Antriebseinheit aktivierbaren Verriegelungsmechanismus aufweist.

Die Erfindung weist eine Not-Entriegelungssteuerung als eigenständigen Funktionsblock in Verbindung mit einem Hochsetzsteller (step-up converter) zur Stromversorgung der Elektromotor-Antriebseinheit auf, wobei die Eingangsspannung des Hochsetzstellers auf die Nennspannung des Elektromotors hochgesetzt wird.

Die Not-Entriegelungssteuerung umfasst einen Mikrocontroller insbesondere zum Steuern und Überwachen der Elektromotor-Antriebseinheit sowie zum Steuern und Überwachen des Hochsetzstellers und zur Kommunikation mit einer übergeordneten, in der Ladestation üblicherweise vorhandenen Verriegelungssteuerung.

Der Hochsetzsteller bewirkt, dass nahezu die gesamte in dem dem Hochsetzsteller vorgeschalteten Speicherkondensator gespeicherte elektrische Energie der Elektromotor-Antriebseinheit zugeführt wird und somit der Motor mit seiner erforderlichen Nennspannung betrieben werden kann. Durch die Verwendung des Hochsetzstellers können die notwendige zu speichernde Energiemenge und damit die Größe und die Kosten des Kondensators erheblich reduziert werden.

## Beschreibung

Die Erfindung betrifft ein Verfahren und eine Schaltungsordnung zur Not-Entriegelung eines Ladesteckers für eine Ladestation zur Aufladung eines elektrischen Energiespeichers eines Elektrofahrzeugs, wobei die Ladestation einen durch eine Elektromotor-Antriebseinheit aktivierbaren Verriegelungsmechanismus aufweist.

Im Zuge der Hinwendung zur Elektromobilität besteht die Notwendigkeit, die elektrischen Energiespeicher der Elektrofahrzeuge regelmäßig aufzuladen. Dazu wird beim konduktiven Laden das Elektrofahrzeug über ein Ladekabel mit einer Ladestation verbunden. Ein an dem Ladekabel angebrachter Ladestecker wird in eine an der Ladestation befindliche Ladesteckdose eingeführt und verriegelt. Die Verriegelung geschieht mittels eines in der Ladestation angeordneten Verriegelungsmechanismus, welcher durch eine Elektromotor-Antriebseinheit aktiviert wird.

Bei einer Not-Entriegelung, beispielsweise bei einem Stromausfall in der Ladestation, muss der den Verriegelungsmechanismus aktivierende Elektromotor für einige Millisekunden eingeschaltet werden (Notfallbetrieb). Dazu wird ein elektrischer Kondensator im Normalbetrieb bis auf die Motornennspannung aufgeladen und bei einem Stromausfall oder einer Spannungsunterschreitung schaltet ein Relais den aufgeladenen Kondensator auf die Elektromotor-Antriebseinheit auf. Dabei wird die in dem Kondensator gespeicherte Energie über den Elektromotor entladen, wobei die Kondensatorspannung entsprechend absinkt. Der Elektromotor ist funktionstüchtig solange die angelegte Spannung - typabhängig - nicht unter 75 % seiner Nennspannung gesunken ist. Danach wird die in dem Kondensator gespeicherte Energie nicht mehr in Bewegungsenergie umgewandelt. Bislang konnten dem Stand der Technik gemäß somit maximal 50 % der gespeicherten Energie in die benötigte Bewegungsenergie umgewandelt werden. Um die Not-Entriegelung zuverlässig durchführen zu können, werden daher in nachteiliger Weise Kondensatoren mit großer elektrischer Kapazität benötigt - typischerweise in der Größenordnung von 20 mF bis 50 mF.

Als weiterer Nachteil erweist sich, dass die Kontakte des den Kondensator aufschaltenden Relais durch sehr hohe Kurzschlussströme beim Einschalten einem Verschleiß unterliegen und somit nur eine begrenzte Lebensdauer aufweisen.

Weitere Nachteile der aus dem Stand der Technik bekannten Lösungen einer Not-Entriegelung sind darin zu sehen, dass die Elektromotor-Antriebseinheit über zwei unterschiedliche Hardware-Motoransteuerungen betrieben wird, wobei eine im Normalbetrieb und die andere für die Not-Entriegelung zuständig ist.

Auch wird bei bekannten Not-Entriegelungen bei einer Fehlauslösung, beispielsweise bei der Übermittlung eines falschen Ladestatus, ein den Ladestrom unterbrechendes Schütz nicht automatisch abgeschaltet. Eine Sicherheitsüberwachung von Ladestationsparametern findet oftmals, beispielsweise in Linux-basierten Systemen, nur in aufwändiger Weise über eine Handware-Implementierung statt.

Der vorliegenden Erfindung liegt somit die Aufgabe zugrunde, ein Verfahren und eine Schaltungsordnung zur Not-Entriegelung des Ladesteckers anzugeben, die eine verschleißarme und zuverlässige Not-Entriegelung bewirken und zugleich technisch und wirtschaftlich effizient sind.

Diese Aufgabe wird bezogen auf ein Verfahren durch die Merkmale in Anspruch 1 gelöst.

Der Grundgedanke der vorliegenden Erfindung beruht vorteilhafterweise darauf, dass eine Not-Entriegelungssteuerung als eigenständiger Funktionsblock in Verbindung mit einem Hochsetzsteller (step-up converter) zur Stromversorgung der Elektromotor-Antriebseinheit vorgesehen ist, wobei die Eingangsspannung des Hochsetzstellers auf die Nennspannung des Elektromotors hochgesetzt wird.

Die Not-Entriegelungssteuerung umfasst einen Mikrocontroller insbesondere zum Steuern und Überwachen der Elektromotor-Antriebseinheit sowie zum Steuern und Überwachen des Hochsetzstellers und zur Kommunikation mit einer übergeordneten, in der Ladestation üblicherweise vorhandenen Verriegelungssteuerung.

Der Hochsetzsteller bewirkt, dass nahezu die gesamte in dem dem Hochsetzsteller vorgeschalteten Speicherkondensator gespeicherte elektrische Energie der Elektromotor-Antriebseinheit zugeführt wird und somit der Motor mit seiner erforderlichen Nennspannung betrieben werden kann. Durch die Verwendung des Hochsetzstellers können die notwendige zu speichernde Energiemenge und damit die Größe und die Kosten des Kondensators erheblich reduziert werden.

Zudem entfallen durch die Bereitstellung der Energie mittels des elektronischen Hochsetzstellers fehleranfällige elektromechanische Bauelemente, wie beispielsweise Relaiskontakte, die verkleben können. Da der Hochsetzsteller die Stromversorgung für die Elektromotor-Antriebseinheit im Normalbetrieb und im Notfallbetrieb bereitstellt, ist eine Strombegrenzung des Anlaufstromes für die Elektromotor-Antriebseinheit im Normal- und im Notfallbetrieb exakt einstellbar.

Es erfolgt erfindungsgemäß eine Datenübermittlung zwischen der Not-Entriegelungssteuerung und der übergeordneten Verriegelungssteuerung über eine erste Kommunikationsschnittstelle. Von der übergeordneten Verriegelungssteuerung werden im Normalbetrieb Befehle zum Ver- oder Entriegeln an die Not-Entriegelungssteuerung gesendet und von der Not-Entriegelungssteuerung wird der Zustand der Verriegelung an die übergeordnete Verriegelungssteuerung übermittelt.

Das erfindungsgemäße Steuern und Überwachen des Hochsetzstellers erfolgt über eine zweite Kommunikationsschnittstelle zur Datenübermittlung zwischen der Not-Entriegelungssteuerung und dem Hochsetzsteller.

Die Not-Entriegelungssteuerung übernimmt über eine dritte Kommunikationsschnittstelle erfindungsgemäß das Steuern und Überwachen der Elektromotor-Antriebseinheit, einschließlich des Empfangs eines Rückmeldesignals von der Elektromotor-Antriebseinheit, so dass das Prüfen einer Stromausfallbedingung, die Durchführung einer Sicherheitsüberwachung sowie eine Sicherheitsabschaltung erfolgen können.

Um eine Bedingung für das Einleiten des Notfallbetriebs zu erkennen, wertet die Not-Entriegelungssteuerung eine physikalische Größe in Form eines Spannungssignals oder eines Stromsignals als Eingangssignal aus.

Wird eine Bedingung für das Einleiten des Notfallbetriebs von der Not-Entriegelungssteuerung erkannt, so leitet die Not-Entriegelungssteuerung eine Entriegelung des Verriegelungsmechanismus über die Elektromotor-Antriebseinheit ein.

In der Not-Entriegelungssteuerung wird nicht nur die Erkennung der Bedingung für das Auslösen eines Notfallbetriebs durchgeführt und die daraufhin erforderlichen Steuersignale an die Elektromotor-Antriebseinheit und den Hochsetzsteller geleitet, sondern die Not-Entriegelungssteuerung übernimmt auch das Steuern und Überwachen der Elektromotor-Antriebseinheit im Normalbetrieb. Dadurch entfällt eine zweite Hardware-Baugruppe zur Steuerung der Elektromotor-Antriebseinheit, was wiederum zu einer Einsparung von Bauraum und zu einer Kostenreduktion führt.

In weiterer vorteilhafter Ausgestaltung wird das Auswerten des Eingangssignals durch Erfassen einer Netzspannung eines die Ladestation versorgenden Stromversorgungssystems mittels einer Ankopplungsschaltung und durch Prüfen der Netzspannung mittels der Not-Entriegelungssteuerung vorgenommen, wobei die Entriegelung des Verriegelungsmechanismus erfolgt und ein Schütz-Abschaltsignal zur Trennung des Elektrofahrzeugs von der Ladestation erzeugt wird, falls als Bedingung für das Einleiten des Notfallbetriebs die erfasste Netzspannung von einem in der übergeordneten Verriegelungssteuerung oder in der Not-Entriegelungssteuerung vorgegebenen Wert abweicht.

Das Erfassen der Netzspannung kann beispielsweise durch eine Überwachung der DC-Versorgungsspannung oder der AC-Versorgungsspannung der Ladestation/Wallbox erfolgen und/oder ein Ausfall der Netzspannung wird über einen Optokoppler als Ankopplungsschaltung erfasst. Ein Ausfall der Netzspannung wird in der Not-Entriegelungssteuerung durch eine Abweichung von einem mittelbar (über die erste Kommunikationsschnittstelle) von der übergeordneten Verriegelungssteuerung oder direkt von der Not-Entriegelungssteuerung vorgegebenen Netz-Nennspannungswert erkannt, beispielsweise durch Unterschreitung des vorgegebenen Netz-Nennspannungs-Grenzwertes.

Bei Erkennung des Ausfalls der Netzspannung wird zudem über einen Not-Abschaltsignalausgang ein Schütz-Abschaltsignal zur Trennung des Elektrofahrzeugs von der Ladestation erzeugt

Weiterhin erfolgt eine Datenübermittlung zwischen der Not-Entriegelungssteuerung und dem Stromversorgungsmodul der Ladestation mittels einer vierten Kommunikationsschnittstelle.

Diese vierte Kommunikationsschnittstelle ermöglicht, dass die Not-Entriegelungssteuerung das Stromversorgungsmodul steuern und überwachen kann und somit das Powermanagement einer Ladekontrolleinrichtung (charge controller) der Ladestation steuern kann.

In weiterer vorteilhafter Ausgestaltung erfolgen in der Not-Entriegelungssteuerung ein Überwachen einer Temperatur über einen Temperatur-signaleingang der Not-Entriegelungssteuerung sowie ein Erzeugen eines Schütz-Abschaltsignals über einen Not-Abschaltsignalausgang, falls eine Temperaturgrenzwertverletzung festgestellt wird.

Die Not-Entriegelungssteuerung weist daher einen Temperatur-Signaleingang auf, wobei ein Temperatur-Grenzwert direkt von der Not-Entriegelungssteuerung vorgegeben oder in der übergeordneten Verriegelungssteuerung abgelegt und über die erste Kommunikationsschnittstelle an die Not-Entriegelungssteuerung übertragen wird.

Die Not-Entriegelungssteuerung kann somit eine sichere elektrische Trennung der Ladesteckdose durch Ansteuern des Schützes bei einer Not-Entriegelung unabhängig von der übergeordneten Verriegelungssteuerung gewährleisten.

Weiter erfolgt als Zusatzfunktion der Not-Entriegelungssteuerung ein Überwachen von Ladestations-Parametern über einen Überwachungssignaleingang der Not-Entriegelungssteuerung und ein Erzeugen eines Schütz-Abschaltsignals, falls die Ladestations-Parameter einen fehlerhaften Zustand der Ladestation erkennen lassen.

So kann im Rahmen einer Fehlerüberwachung ein Ladefehler, wie beispielsweise ein falscher Ladestrom über das Ladekabel, das Schütz mit dem Schütz-Abschaltsignal geschaltet werden oder es wird der "Control Pilot" (CP) überwacht und bei Fehlern (fehlerhafter Ladestatus oder fehlerhaftes Pulsweitenmodulations-(PWM)-Signal) das Schütz über das Schütz-Abschaltsignal geschaltet.

Auch ist es möglich, die von einer Ladestrommessung generierten Daten (Messdaten) zu überwachen und bei Fehlern (zu hohe Stromwerte, fehlerhafte Spannung, falsches Drehfeld, fehlender L-Leiter) das Schütz über das Schütz-Abschaltsignal zu schalten. Im Falle der Überwachung der Messdaten ist die Aktivierung des Notfallbetriebs, also die Entriegelung des Verriegelungsmechanismus, optional und wird von der übergeordneten Verriegelungssteuerung oder der Not-Entriegelungssteuerung parametriert.

Ein Schütz-Abschaltsignal wird somit immer dann von der Not-Entriegelungssteuerung ausgelöst, wenn eine der Abschaltbedingungen Notfallbetrieb nach Erkennung eines Netzspannungsänderung, insbesondere eines Netzspannungsausfalls, eine Temperaturgrenzwert-Verletzung oder ein über den Überwachungs-Signaleingang erkannter und als solcher bewerteter Fehler vorliegt.

Mit Vorteil wird im Notfallbetrieb die in einem Speicherkondensator des Stromversorgungsmoduls gespeicherte elektrische Energie verwendet.

Im Notfallbetrieb wird die (Rest-)Energie des Gesamtsystems Ladestation, insbesondere die in einem Speicherkondensator des Stromversorgungsmoduls gespeicherte elektrische Energie, zur Ausführung des Notfallbetriebs verwendet.

In weiterer vorteilhafter Ausgestaltung erfolgt ein Bereitstellen einer autarken Versorgungsspannung für die Not-Entriegelungssteuerung mittels einer autarken Stromversorgung, die von einem Energiespeicher gespeist wird. Die autarke Stromversorgung kann beispielsweise als Festspannungsregler ausgeführt sein, der eine (autarke) Versorgungsspannung für die Not-Entriegelungssteuerung bereitstellt.

In Umsetzung der Verfahrensschritte wird die der Erfindung zugrundeliegende Aufgabe weiterhin durch eine Schaltungsanordnung zur Not-Entriegelung eines Ladesteckers für eine Ladestation gelöst.

Insoweit treffen auch die vorgenannten technischen Wirkungen und die daraus entstehenden Vorteile auf die Vorrichtungsmerkmale der Schaltungsanordnung zu.

Die erfindungsgemäße Schaltungsanordnung weist eine Not-Entriegelungssteuerung mit einem Mikrocontroller sowie einen Hochsetzsteller auf.

Der Mikrocontroller ist so konfiguriert, dass er die in der Not-Entriegelungssteuerung ablaufenden Verfahrensschritte, insbesondere das Auswerten einer physikalischen Größe als ein Eingangssignal zur Erkennung eines Notfallbetriebs, das Übermitteln von Daten zwischen der Not-Entriegelungssteuerung und einer übergeordneten Verriegelungssteuerung, das Steuern und Überwachen des Hochsetzstellers sowie das Steuern und Überwachen der Elektromotor-Antriebseinheit ausführt.

Mit Vorteil ist der Mikrocontroller weiter eingerichtet zum Übermitteln von Daten zwischen der Not-Entriegelungssteuerung und einem Stromversorgungsmodul der Ladestation, umfassend das Steuern und Überwachen des Stromversorgungsmoduls, zum Überwachen einer Temperatur, zum Überwachen von Ladestations-Parametern sowie zum Erzeugen eines Schütz-Abschaltsignal s.

Weitere vorteilhafte Ausgestaltungsmerkmale ergeben sich aus der nachfolgenden Beschreibung und der Zeichnung, die eine bevorzugte Ausführungsform der Erfindung anhand eines Beispiels erläutert. Es zeigt die Fig.:
ein funktionales Blockdiagramm der erfindungsgemäßen Schaltungsanordnung zur Notentriegelung.

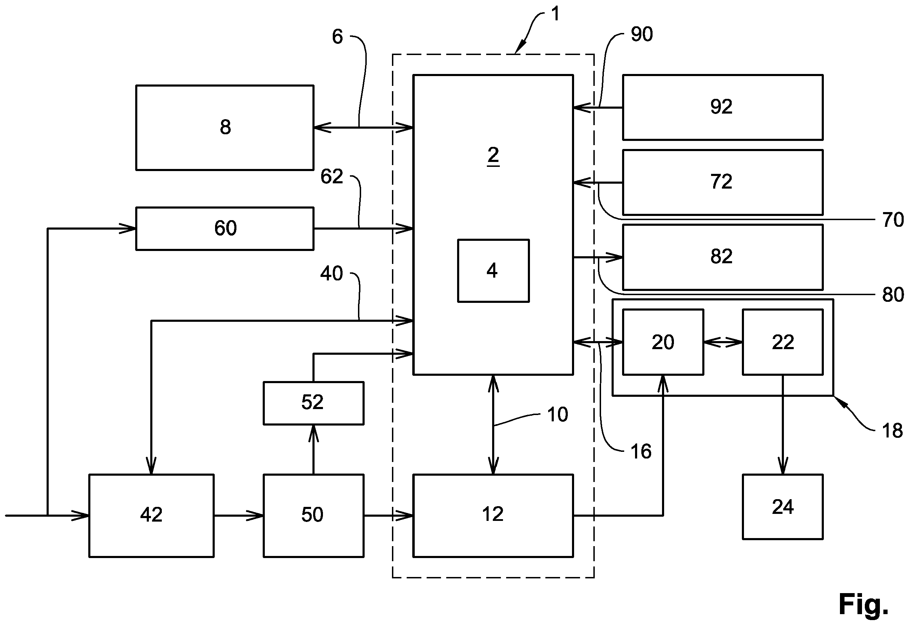

In **Fig. 1** ist die erfindungsgemäße Schaltungsordnung 1 zur Not-Entriegelung in ihrem funktionellen Zusammenwirken mit weiteren Funktionsblöcken einer Ladestation zur Aufladung eines elektrischen Energiespeichers eines Elektrofahrzeugs dargestellt.

Die Schaltungsanordnung 1 umfasst eine Not-Entriegelungssteuerung 2, welche einen Mikrocontroller 4 aufweist. Die Not-Entriegelungssteuerung 2 umfasst weiterhin eine erste Kommunikationsschnittstelle 6 zum Übermitteln von Daten mit einer übergeordneten Verriegelungssteuerung 8. Neben dem im Normalbetrieb von der übergeordneten Verriegelungssteuerung 8 empfangenen Ver- oder Entriegelungsbefehl kann die Not-Entriegelungssteuerung 2 als optionale Befehle empfangen: Rezepte für unterschiedliche Elektromotoren mit Motorparametern (Steuerungszeitpunkte, Strombegrenzung), Updates für die Entriegelungssteuerung, Not-Entriegelung aktiviert/deaktiviert, Temperaturgrenzwerte und Rezepte für unterschiedliche Temperatursituationen.

Zu der übergeordneten Verriegelungssteuerung 8 können über die erste Kommunikationsschnittstelle 6 neben der Übermittlung des Zustands der Verriegelung (verriegelt/entriegelt) im Normalbetrieb optional Diagnosewerte wie elektrische Spannungen des Motors, Versorgungsspannungen oder Zwischenspannungen, Temperaturen oder Schaltvorgänge als Daten übertragen werden.

Weiterhin umfasst die Schaltungsanordnung 1 einen Hochsetzsteller 12 (step-up converter), welcher in Normalbetrieb und im Notfallbetrieb eine Stromversorgung für eine Elektromotor-Antriebseinheit 18 bereitstellt.

Zur Kommunikation mit dem Hochsetzsteller 12 weist die Not-Entriegelungssteuerung 2 eine zweite Kommunikationsschnittstelle 10 auf. Über diese zweite Kommunikationsschnittstelle 10 wird der Hochsetzsteller 12 von dem in der Not-Entriegelungssteuerung 2 angeordneten Mikrocontroller 4 gesteuert und überwacht, wobei der Hochsetzsteller 12 ein- und ausgeschaltet wird sowie dessen Ein- und Ausgangsspannung und Ausgangsstrom bestimmt wird.

Eine dritte Kommunikationsschnittstelle 16 der Not-Entriegelungssteuerung 2 steuert und überwacht die Elektromotor-Antriebseinheit 18 im Normal- und im Notfallbetrieb. Dazu steuert der in der Not-Entriegelungssteuerung 2 angeordnete Mikrocontroller 4 einen Motortreiber 20 der Elektromotor-Antriebseinheit 18 an. Ein Elektromotor 22 der Elektromotor-Antriebseinheit 18 aktiviert den Verriegelungsmechanismus 24 entsprechend den Befehlen des Mikrocontrollers 4.

Die Not-Entriegelungssteuerung 2 umfasst weiter eine vierte Kommunikationsschnittstelle 40 zur Datenübermittlung zwischen der Not-Entriegelungssteuerung 2 und einem Stromversorgungsmodul 42 der Ladestation. Über diese vierte Kommunikationsschnittstelle 40 können Spannungsunterbrechungen und damit ein Notfallbetrieb erkannt werden und gegebenenfalls Systeme einer Ladekontrolleinrichtung über das Stromversorgungsmodul 42 geordnet abgeschaltet werden, um Energie im Gesamtsystem zu sparen. Eine vorhandene Restenergie, beispielsweise aus dem Stromversorgungsmodul 42, steht dann einem Energiespeicher 50 (siehe unten) zusätzlich zur Verfügung. Somit ist die Not-Entriegelungssteuerung 2 auch für das Stromversorgungsmanagement (Powermanagement) der gesamten Ladekontrolleinrichtung einsetzbar.

Ein Energiespeicher 50 - hier als separater Energiespeicher 50 dargestellt, der aber auch Bestandteil des Stromversorgungsmoduls 42 sein kann - stellt die Energie für den Hochsetzsteller 12 und für eine autarke Stromversorgung 52 der Not-Entriegelungssteuerung 2 zur Verfügung.

Über eine Ankopplungsschaltung 60 erfolgt das Auswerten einer physikalischen Größe als Eingangssignal durch Prüfen einer Netzspannung eines die Ladestation versorgenden Stromversorgungssystems. Dabei kann der Mikrocontroller 4 beispielsweise eine DC-Versorgungsspannung oder AC-Versorgungsspannung der Ladestation/Wallbox prüfen, um eine Bedingung für das Einleiten des Notfallbetriebs zu erkennen.

Als weitere Merkmale der Not-Entriegelungssteuerung 2 weist diese einen Temperatursignaleingang 70 zum Empfangen eines Temperatursignals von einem Temperatursensor 72 auf.

Ebenso können über einen Überwachungssignaleingang 90 Signale von Überwachungseinrichtungen 92 zur Überwachung von Ladestations-Parametern wie beispielsweise Ladezustands-Parameter oder Verbrauchs-Messdaten empfangen werden.

Über einen Notabschaltsignalausgang 80 erfolgt die Notabschaltung über ein (Schalt-)Schütz 82 - beispielsweise bei einem Netzspannungsausfall, einer Temperaturgrenzwert-Verletzung oder bei fehlerhaften über den Überwachungs-Signaleingang 90 empfangenen Daten wie beispielsweise Ladezustands-Parameter oder fehlerhafte Daten der Verbrauchsmessung.

## Patentansprüche

1. Verfahren zur Not-Entriegelung eines Ladesteckers für eine Ladestation zur Aufladung eines elektrischen Energiespeichers eines Elektrofahrzeugs, wobei die Ladestation einen durch eine Elektromotor-Antriebseinheit (18) aktivierbaren Verriegelungsmechanismus (24) aufweist, umfassend die Verfahrensschritte:
- Bereitstellen einer Stromversorgung für die Elektromotor-Antriebseinheit (18) im Normalbetrieb und im Notfallbetrieb mittels eines Hochsetzstellers (12),
- Auswerten einer physikalischen Größe als ein Eingangssignal (62) zur Erkennung einer Bedingung für das Einleiten des Notfallbetriebs mittels einer Not-Entriegelungssteuerung (2),
- Übermitteln von Daten zwischen der Not-Entriegelungssteuerung (2) und einer übergeordneten Verriegelungssteuerung (8),
- Steuern und Überwachen des Hochsetzstellers (12) mittels der Not-Entriegelungssteuerung (2),
- Steuern und Überwachen der Elektromotor-Antriebseinheit (18) im Normalbetrieb und im Notfallbetrieb mittels der Not-Entriegelungssteuerung (2), wobei im Notfallbetrieb eine Entriegelung des Verriegelungsmechanismus (24) über die Elektromotor-Antriebseinheit (18) erfolgt.

2. Verfahren nach Anspruch 1,
**dadurch gekennzeichnet,**
**dass** das Auswerten des Eingangssignals durch Erfassen einer Netzspannung eines die Ladestation versorgenden Stromversorgungssystems mittels einer Ankopplungsschaltung (60) und
Prüfen der Netzspannung mittels der Not-Entriegelungssteuerung (2) erfolgen, wobei
die Entriegelung des Verriegelungsmechanismus (24) erfolgt und ein Schütz-Abschaltsignal zur Trennung des Elektrofahrzeugs von der Ladestation erzeugt wird, falls als Bedingung für das Einleiten des Notfallbetriebs die erfasste Netzspannung von einem in der übergeordneten Verriegelungssteuerung (8) oder in der Not-Entriegelungssteuerung (2) vorgegebenen Wert abweicht.

3. Verfahren nach Anspruch 1 oder 2,
**gekennzeichnet durch**
Übermitteln von Daten zwischen der Not-Entriegelungssteuerung (2) und einem Stromversorgungsmodul (42) der Ladestation.

4. Verfahren nach Anspruch 3,
**gekennzeichnet durch**
dass die Not-Entriegelungssteuerung (2) das Stromversorgungsmodul (42) steuert und überwacht.

5. Verfahren nach einem der Ansprüche 1 bis 4,
**gekennzeichnet durch**
Überwachen einer Temperatur über einen Temperatur-Signaleingang (70) und
Erzeugen eines Schütz-Abschaltsignals, falls eine Temperaturgrenzwert-Verletzung festgestellt wird.

6. Verfahren nach einem der Ansprüche 1 bis 5,
**gekennzeichnet durch**
Überwachen von Ladestations-Parametern über einen Überwachungs-Signaleingang (90) und
Erzeugen eines Schütz-Abschaltsignals, falls die Ladestations-Parameter einen fehlerhaften Zustand der Ladestation erkennen lassen.

7. Verfahren nach einem der Ansprüche 1 bis 6,
**dadurch gekennzeichnet,**
**dass** im Notfallbetrieb die in einem Speicherkondensator des Stromversorgungsmoduls (42) gespeicherte elektrische Energie verwendet wird.

8. Verfahren nach einem der Ansprüche 1 bis 7,
**gekennzeichnet durch**
Bereitstellen einer autarken Versorgungsspannung für die Not-Entriegelungssteuerung (2) mittels einer autarken Stromversorgung (52), die von einem Energiespeicher (50) gespeist wird.

9. Schaltungsanordnung (1) zur Not-Entriegelung eines Ladesteckers für eine Ladestation zur Aufladung eines elektrischen Energiespeichers eines Elektrofahrzeugs, wobei die Ladestation einen durch eine Elektromotor-Antriebseinheit (18) aktivierbaren Verriegelungsmechanismus (24) aufweist, bestehend aus
einer Not-Entriegelungssteuerung (2) mit einem Mikrocontroller (4), der konfiguriert ist zur Ausführung der in der Not-Entriegelungssteuerung (2) ablaufenden Verfahrensschritte nach einem der Ansprüche 1 bis 8,
einem Hochsetzsteller (12),
einer ersten Kommunikationsschnittstelle (6) zur Datenübermittlung zwischen der Not-Entriegelungssteuerung (2) und einer übergeordneten Verriegelungssteuerung (8),
einer zweiten Kommunikationsschnittstelle (10) zur Datenübermittlung zwischen der Not-Entriegelungssteuerung (2) und dem Hochsetzsteller (12), und
einer dritten Kommunikationsschnittstelle (16) zur Datenübermittlung zwischen der Not-Entriegelungssteuerung (2) und der Elektromotor-Antriebseinheit (18).

10. Schaltungsanordnung nach Anspruch 9,
**gekennzeichnet durch**
eine Ankopplungsschaltung (60) zur Erfassung einer Netzspannung eines die Ladestation versorgenden Stromversorgungssystems.

11. Schaltungsanordnung nach Anspruch 9 oder 10,
**dadurch gekennzeichnet,**
**dass** die Not-Entriegelungssteuerung (2) weiter aufweist eine vierte Kommunikationsschnittstelle (40) zur Datenübermittlung zwischen der Not-Entriegelungssteuerung (2) und einem Stromversorgungsmodul (42) der Ladestation.

12. Schaltungsanordnung nach einem der Ansprüche 9 bis 11,
**dadurch gekennzeichnet,**
**dass** die Not-Entriegelungssteuerung
einen Temperatur-Signaleingang (70) zur Temperaturüberwachung, einen Not-Abschaltsignalausgang (80) für die Notabschaltung eines Schaltschützes (82) bei einer Not-Entriegelung und
einen Überwachungs-Signalsignaleingang (90) zur Überwachung von Ladestations-Parametern aufweist.

13. Schaltungsanordnung nach einem der Ansprüche 9 bis 12,
**gekennzeichnet durch**
eine autarke Stromversorgung (52), die von einem Energiespeicher (50) gespeist wird, zur Bereitstellung einer autarken Versorgungsspannung für die Not-Entriegelungssteuerung (2).
